# EUROPEAN PATENT APPLICATION

(11) **EP 1 204 056 A1**
(43) Date of publication of application: **08.05.2002**
(21) Application number: 01203023.5
(22) Date of filing: 09.08.2001
(51) Int. Cl.: G06F 17/60

(54) **System for collecting data via an electronic network**

(30) Priority: 09.08.2000 NL 1015899
(71) Applicant: SuperCollect - Patent B.V., 2611 KH Delft (NL)
(72) Inventor: Stol, Hans Rudi, 2611 KH Delft (NL); Van Nek, Hans Anthon Louis, 3062 XJ Rotterdam (NL)
(74) Representative: 't Jong, Bastiaan Jacob

(57) **Abstract**

The invention relates to a system for collecting data via an electronic network, which system comprises:
- a number of data suppliers which manage data sources and which are connected to the network;
- at least one data collector connected to the network; and
- at least one managing system for managing the data flows between data suppliers and the at least one data collector.

## Description

The invention relates to a system for collecting data via an electronic network.

The completing of request forms, the contents of which must be derived from one or more computerized company records, is not possible in simple manner. The data can of course be retrieved and entered by hand, although if the data must be provided periodically, this costs a great deal of time.

It is an object of the invention to solve the above stated problem. This is achieved with a system for collecting data via an electronic network, which system comprises:
- a number of data suppliers which manage data sources and which are connected to the network;
- at least one data collector connected to the network; and
- at least one managing system for managing the data flows between data suppliers and the at least one data collector.

Differences of meaning in the data of the different company records as well as differences in storage formats and data structures cause additional problems in the automatic processing. Great problems thus occur in the production of consolidated reports from diverse departmental records of subsidiaries with their own administrative system of the data collector. The completing of electronic request forms, wherein the data must be retrieved from diverse company records, also causes a number of problems for the data collector.

It is a further object of the invention to also obviate these drawbacks.

This object is at least partly achieved with a method for collecting data, which method comprises the steps of:
- defining a number of data fields as a request form;
- sending the request form to a managing system; and
- periodically receiving request forms provided with data from the data suppliers.

The formulation of a request form with a number of defined data fields ensures that a limited amount of predetermined data is received from the data suppliers.

In a preferred embodiment of the method for collecting data, the preconditions of the data fields are defined. An extra certainty is thus built in that the correct data is received. These preconditions can relate for instance to the type of data, such as currency, numbers and so on, or a range within which the supplied data must fall.

In another embodiment of the method for collecting data, the method comprises the steps of:
- providing an encoding key for encoding the request forms provided with data; and
- decoding the request form provided with data after the request form has been received.

By providing an encoding key the data supplier can encode its completed request form, and only the collector of the data can decode it.

In yet another method for collecting data, a unique code is assigned to each defined data field. A determined item of data is defined with this unique code, which simplifies the archiving of this data.

The invention further comprises a method for supplying data from data sources, which method comprises the steps of:
- receiving a request form with a number of data fields from a managing system;
- defining links between the data fields and the data sources;
- periodically completing the data fields by means of the links with data from the data sources; and
- sending the completed request form in each case to the managing system.

When a new request form is received, links must be defined between the data fields and the data sources of for instance the records of a company. These links ensure that the fields of the request form are automatically provided with data from the data sources. When now the same request form must be completed again after a certain period, this can take place wholly automatically. This simplifies the work considerably.

In a preferred embodiment of the method for supplying data from data sources, derivation rules are defined in the links for deriving the desired data from the data sources. It can occur that an item of data required by the request form cannot be copied directly from the records of a company. A small calculation is for instance necessary to arrive at the desired item of data. Such a formula can then be included in the link.

In a preferred embodiment the method for supplying data from data sources comprises the step, after the data has been entered, of verifying the validity and integrity of the data on the basis of previously entered data. When for instance a request form has already been completed previously, the newly entered data can then be checked on the basis of the previous data.

When there is a very great discrepancy between two items of data, this may point to incorrect data.

In yet another embodiment of the method for supplying data, the links between data fields and the data sources are archived. When a new request form is received, the old request form will then be discontinued, and with it the defined links. It may be the case however that certain data fields are the same and the links therefore the same. It may also be that the data fields recur in subsequent request forms. By now archiving the links it will be possible to automatically apply a number of links from the archive in a new request form.

Yet another embodiment of the method for supplying data comprises the step of having a user authorize the sending of the completed request form. In order to prevent data being sent to the data collector completely unnoticed, it is possible to provide for a user to have to give his consent herefor.

The invention further comprises a method for managing the data flows between data suppliers, which manage data sources, and the at least one data collector, which method comprises the steps of:
- receiving a request form for completing from the at least one data collector;
- sending the request form to the data suppliers;
- receiving request forms provided with data from the data suppliers;
- sending the request forms provided with data to the at least one data collector.

According to a preferred embodiment this method comprises the step of sending messages to the data suppliers. These messages can comprise advance notices of new request forms, but may also be reminders to send completed request forms.

In another embodiment of this method, the method comprises the step of logging the status of each data supplier. A check is hereby made as to which data supplier has which request form and which request forms have been sent back completed.

These and other features of the invention are further elucidated on the basis of the following description of an embodiment.

For the collection of data a request form is formulated using a spreadsheet, such as microsoft excel, on which request form are arranged a number of fields for completing. Using a workbench the data collector can draw up and manage the request forms, and test the request forms. A number of test situations can thus be simulated, the syntax, the completeness and validity of the request form can be checked.

Once the request form has been approved, it is then sent to a managing system. The managing system sends messages that a new request form is present to the different data suppliers. A data supplier will then retrieve this request form via the network, such as internet, and open the request form in a spreadsheet. Links will then be defined for a number of, or all, data fields of the request form for the purpose of retrieving data from for instance the records of a company. These links can be realized using the standard options of the spreadsheet.

When the data has to be sent, it is possible to click on a send button in the form, whereby the integrity of the data is verified. If this is the case, a data structure is created with the data therein. This data structure is then encoded on the basis of an encoding key which has been received from the data collector. The data structure is preferably an XML structure. The encoded data structure is then sent to the managing system via the network.

The managing system registers the receipt of the completed request form and registers this for the status report. The files are then sent on to the data collector.

The data collector firstly decodes the file into a legible data structure. The data included in the data structure can then be collected together with the data from other completed request forms and processed into the desired reports.

## Claims

1. System for collecting data via an electronic network, which system comprises:
- a number of data suppliers which manage data sources and which are connected to the network;
- at least one data collector connected to the network; and
- at least one managing system for managing the data flows between data suppliers and the at least one data collector.

2. Method for collecting data, which method comprises the steps of:
- defining a number of data fields as a request form;
- sending the request form to a managing system; and
- periodically receiving request forms provided with data from the data suppliers.

3. Method as claimed in claim 2, comprising the step of defining the preconditions of the data fields.

4. Method as claimed in claim 2 or 3, comprising the steps of:
- providing an encoding key for encoding the request forms provided with data; and
- decoding the request form provided with data after the request form has been received.

5. Method as claimed in any of the claims 2-4, comprising the step of:
- assigning a unique code to each defined data field.

6. Method for supplying data from data sources, which method comprises the steps of:
- receiving a request form with a number of data fields from a managing system;
- defining links between the data fields and the data sources;
- periodically completing the data fields by means of the links with data from the data sources; and
- sending the completed request form in each case to the managing system.

7. Method as claimed in claim 6, wherein derivation rules are defined in the link for deriving the desired data from the data sources.

8. Method as claimed in claim 6 or 7, comprising the step, after the data has been entered, of verifying the validity and integrity of the data on the basis of previously entered data.

9. Method as claimed in any of the claims 6-8, comprising the step of archiving the links between data fields and the data sources.

10. Method as claimed in any of the claims 6-9, comprising the step of having a user authorize the sending of the completed request form.

11. Method for managing the data flows between data suppliers, which manage data sources, and the at least one data collector, which method comprises the steps of:
- receiving a request form for completing from the at least one data collector;
- making the request form available to the data suppliers;
- receiving request forms provided with data from the data suppliers;
- sending the request forms provided with data to the at least one data collector.

12. Method as claimed in claim 11, comprising the step of sending messages to the data suppliers.

13. Method as claimed in claim 11 or 12, comprising the step of logging the status of each data supplier.
